# EUROPEAN PATENT APPLICATION

(11) **EP 0 905 663 A1**
(43) Date of publication of application: **31.03.1999**
(21) Application number: 98305661.5
(22) Date of filing: 16.07.1998
(51) Int. Cl.: G09B 1/00, G09B 5/06

(54) **Multipurpose learning device**

(30) Priority: 16.07.1997 KR 9732980
(71) Applicant: Samsung Electronics Co., Ltd., Suwon-si, Kyungki-do (KR)
(72) Inventor: Hur, Jeong, Seocho-gu, Seoul (KR); Kang, Il-dong, Seodaemun-gu, Seoul (KR)
(74) Representative: Chugg, David John

(57) **Abstract**

Disclosed is a device, in which the pages (151a) comprising a picture book (151) are unfolded about an unfolding axis which is parallel to a hinged direction of an upper case (112) and lower case (114) comprising a main body (115) of the device. The device includes a memory unit storing learning information which is preferably detachably connected to a touch board (120) of the device. The surface of the touch board is preferably declined to a predetermined angle for a user to easily use the multipurpose learning device from the point of view of ergonomics.

## Description

The present invention relates to a multipurpose learning device, and more particularly, relates to a multipurpose learning device having reduced size and weight.

Due to technical improvements in electronics, many educational machines for toddlers and children have been developed. Especially, the latest trend is to develop machines that incorporate a displaying function to entice children's interest. As a result, the purpose of such machines can be better served by prolonging their interest in learning from each machine. Some examples of the purpose are to increase imaginative power, communicability, arithmetic ability, linguistic ability, colour distinguishing ability and to raise moral and social consciousness.

Multipurpose learning devices in the field of the present invention adapt multimedia technology to a conventional picture book which is used for the intellectual development of toddlers and children. Such a device has a function to output audio/video (A/V) signals through an A/V output unit, like a television, for children to watch the picture and listen to the sound of the book that they are reading.

Moreover, such a device allows a user to interact with the machine. For example, when a child selects a specific scene from a picture book, the child can see the corresponding picture and listen to the explanatory sound of the picture. Since such devices interestingly incorporate pictures of a picture book and A/V effects output through the television or any other A/V output units, the children can enhance their learning by actively interacting with such devices. Moreover, since lessons from the devices can be repeated as often as children desire, the effect of education can be increased.

In the following description a picture book module may be taken to mean a picture book having a plurality of pages of pictures, a fixation body for supporting the picture book and a package including an information storing device which stores multimedia learning information. Furthermore, a given picture amongst the pictures drawn on each page of the picture book and linked to the multimedia learning information is especially called a picture button.

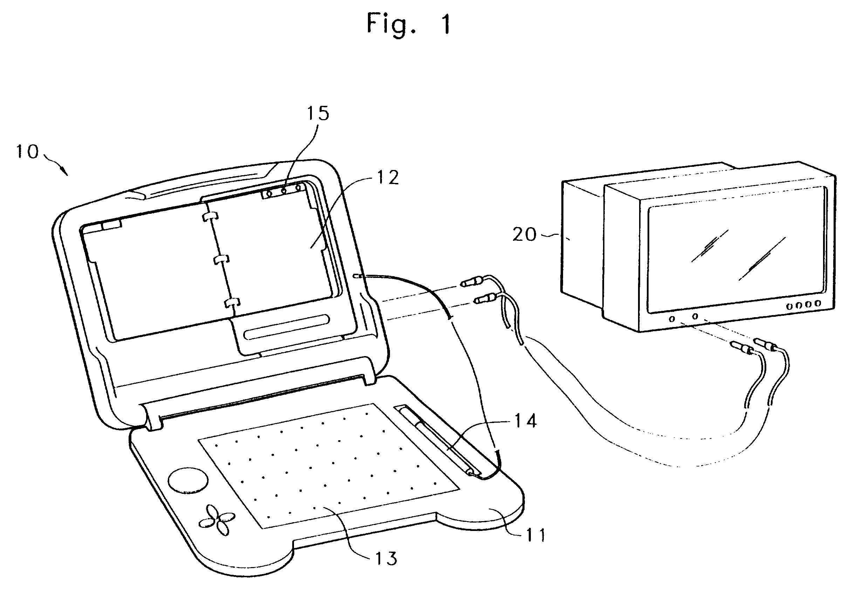

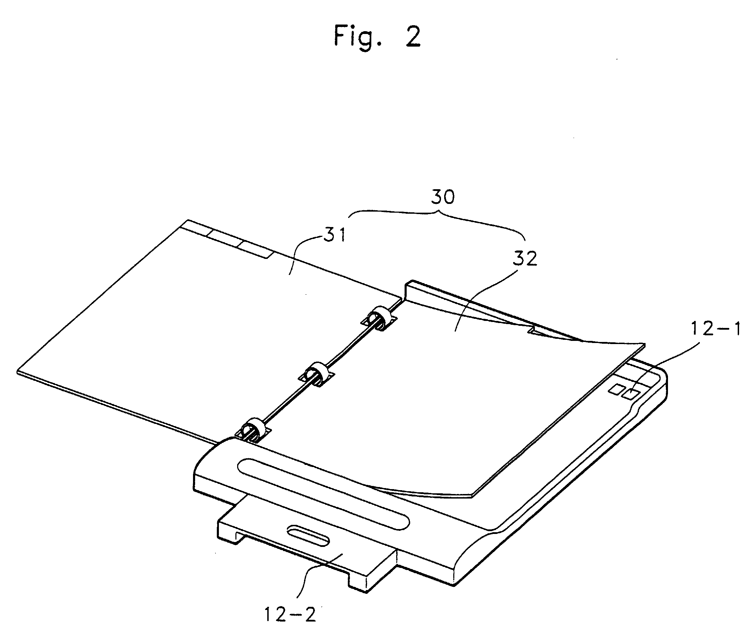

Figure 1 is a perspective view illustrating a formation of a conventional multipurpose learning device, and Figure 2 is a visual perspective view of a conventional picture book module which is applied to the multipurpose learning device of Figure 1.

As shown in Figure 1, the conventional multipurpose learning device 10 is made of a main body 11 which has a lower case and an upper case which is combined with the lower case by a hinge and a picture book module 12 which is detachably fixed on the upper case.

The main body 11 includes a control device for generally controlling the operation of the multipurpose learning device and an A/V output terminal for respectively outputting related audio and video representations of the picture book to an A/V output unit, respectively. Each A/V output terminal is respectively connected to an A/V input terminal of the displaying device 20 and outputs voice and image corresponding to the predetermined picture.

Furthermore, main body 11 includes an electronic pen 14 for selecting a desirable picture to be seen and heard and a touch board 13 which senses the position of the electronic pen 14 and transmits the position of the electric pen 14 to the control device so that the user operates the multimedia learning device immediately.

Moreover, as shown in Figure 2, the picture book module 12 includes a supporting body 12-3 and a picture book 30 which is received in the supporting body 12-3 and consists of a plurality of sheets 31 and 32 in which many pictures are drawn. An information storing device(not shown) having multimedia learning information corresponding to each picture in the sheets 31 and 32 of the picture book, a page recognition sensor 12-1 for recognizing the page of the sheets 31 and 32 and a connector 12-2 for electronically connecting to the main body 11 are installed on the supporting body.

The operation of the above-mentioned conventional multipurpose learning device will be described hereinafter.

First, a selected picture book module 12 based on an interested subject by a user is inserted into an upper case of the main body 11. Afterward, when the main body 11 is supplied with power, the corresponding audio and video representations of the predetermined picture book module 12 are outputted to the A/V output unit 20, so a user can see the corresponding picture and listen to the explanatory sound of the picture.

In the mean time, as shown in Figure 2, each sheet 31 and 32 of the picture book module 12 has an upper right portion which is cut proportionally to the number of the page and the page recognition sensors 12-1 for example light sensors are arranged in a row corresponding to the upper right portion on the supporting body 12-3. Therefore, when a user inserts the picture book module 12 into the corresponding space of the main body 11 and turns the first sheet, the page recognition sensor 12-1 corresponding to the right upper portion of the first sheet sense that the first page is opened. As a result, the controller determines a page of the current sheet referring to the sensor activated.

Consequently, when a user turns the sheets 31 and 32, the controller of the main body 11 reads the multimedia information which contains A/V signals from an information storing memory of the picture book module 12 corresponding to a current page and outputs the information to the A/V output unit 20, such as a television. Therefore, when the opened page is 1, similar audio and video representations of the page 1 will be seen and heard through the television.

At this time, when a user touches a touch board 13 by using an electronic pen 14, a cursor appears in the A/V output unit corresponding to the position of a touch board 13 and moves depending on the movement of the electronic pen 14. Accordingly, a user can see the movement of the cursor and directly select a predetermined picture button on which the cursor is located. Subsequently, when a user selects one picture button in the picture book by using the electric pen 14, the corresponding A/V representations can be seen and heard through the A/V output unit 20. For example, if a sun icon among the picture buttons is selected, the user can see the time varying images of the sun which is rising from the east and setting in the west and hear the explanatory sound related to the sun through the television.

Meanwhile, when a user turns to a next sheet, the screen of the A/V output unit 20 is turned to a new screen which corresponds to a new picture of the newly turned sheets 31 and 32.

Since the information storing device of the picture book module 12 stores the image information and the audio information which are corresponding to each drawn sheet 31 and 32 of the picture book of a package unit, so a user only has to change the picture book module 12 to experience a different subject in the same manner as mentioned above.

But, the conventional multipurpose learning device which operates as aforementioned manner has many problems hereinafter.
(1) In a long-term use, each page of the picture book is easily injured by the electronic pen which selects a picture button on the picture book with direct touches, so the conventional multipurpose learning device has the possibility of easy deformation of the pictures mainly associated with the long-term use by a user.
(2) The replacement of the information storing device is difficult because it is installed on the lower case of the main body, so a user may disassemble the lower case of the main body for replacing the information storing device.
(3) The size of the supporting body is large because the pages of the picture book are turned from side to side.
(4) The multipurpose learning device is too heavy to use for a toddler because the picture book and the supporting body are formed as a single module.

Therefore, it is an aim of embodiments of the present invention to prevent damage caused to the pages in the picture book which could result from direct contact with the electronic pen 14.

It is another aim of embodiments of the present invention to reduce the size and lighten the weight of the picture book.

It is still another aim to provide easy extensibility of the information storing device corresponding to the picture book.

According to an aspect of the invention, there is provided a multipurpose learning device, comprising: a main body having an upper case and a lower case which are hinge-connected; a picture book module received to said main body; and, an electronic pen for selecting learning information from said picture book module, wherein said picture book module includes: a picture book including a plurality of sheets; a memory unit for storing multimedia learning information corresponding to said picture book; and a touch board for sensing movement of said electronic pen relative to said picture book.

Preferably, the axis of the hinge joining the upper case and the lower case is substantially parallel to an unfolding axis of the sheets.

Preferably, the memory unit is detachably connected to said picture book module.

Preferably, each front page of said picture book except a cover is a blank space and each rear page of said picture book has a plurality of pictures.

Preferably, said electronic pen is arranged to be brought into close association with contact with said rear pages for triggering the selection of learning information.

Said memory unit preferably comprise: a printed circuit board having an information storing device which stores said learning information; a lower receiving unit in which said printed circuit board is received on which a connecting portion is formed; and an upper cover combined with said lower receiving unit.

Preferably, a support is provided having a connecting region attached on the rear side of said touch board and said memory unit is provided installed on said touch board by combining said connecting portion with the connecting region of said support.

Preferably, information storing device is a ROM.

The front surface of said touch board is preferably declined, in use, to a predetermined angle so as to slope toward a user.

Preferably, said touch board is wedge-shaped such that the front surface of the touch board slopes upwardly with respect to the rear surface.

Preferably, the front surface of the lower case on which said touch board is received is declined to a predetermined angle.

Said predetermined angle may be 35° or less.

According to preferred embodiments of the present invention, the pages of the picture book which is attached to the hinge-connected main body with the upper case and the lower case are formed in such a manner that the pages are turned to the hinged direction of the upper case and the lower case - this feature helps to minimize device size and weight. Preferably, each front page of the picture book except a cover is a blank space, the electronic pen contacts and moves on the front page and each picture is drawn in each rear page of the picture book - this feature helps the picture on the pages escape damage which might otherwise be caused.

The preferred feature of the memory unit having the information storing device for storing learning information being detachably installed on the rear side of the touch board enables alternate learning information to be associated with the same pages of the picture book for instance. In the one embodiment, a connecting protrusion is provided formed on a memory unit and a co-operating connecting groove is formed on a support which is fixed to the rear side of the touch board so as to facilitate mutual combining of the memory unit and the touch board.

Moreover, in further preferred embodiments the surface of the touch board or the surface of the lower case on which the touch board is installed is inclined to a predetermined angle and preferably the predetermined angle is 35° or less, the purpose of such inclination being to enhance usage from an ergonomic viewpoint.

For a better understanding of the invention, and to show how embodiments of the same may be carried into effect, reference will now be made, by way of example, to the accompanying diagrammatic drawings, in which:
Figure 1 is a perspective view schematically illustrating formation of a conventional multipurpose learning device;
Figure 2 is an outer perspective view of a conventional picture book applied to the multipurpose learning device of Figure 1;
Figure 3 is a perspective view illustrating an unfolded state of a multipurpose learning device according to an embodiment of the present invention;
Figure 4 is a perspective view illustrating a folded state of the multipurpose learning device of Figure 3;
Figure 5 is an operational block diagram of a multipurpose learning device according to an embodiment of the present invention;
Figure 6 is an exploded perspective view of a picture book module applied to the multipurpose learning device of Figures 3 to 5; and
Figure 7 is a perspective view illustrating an unfolded state of the picture book.

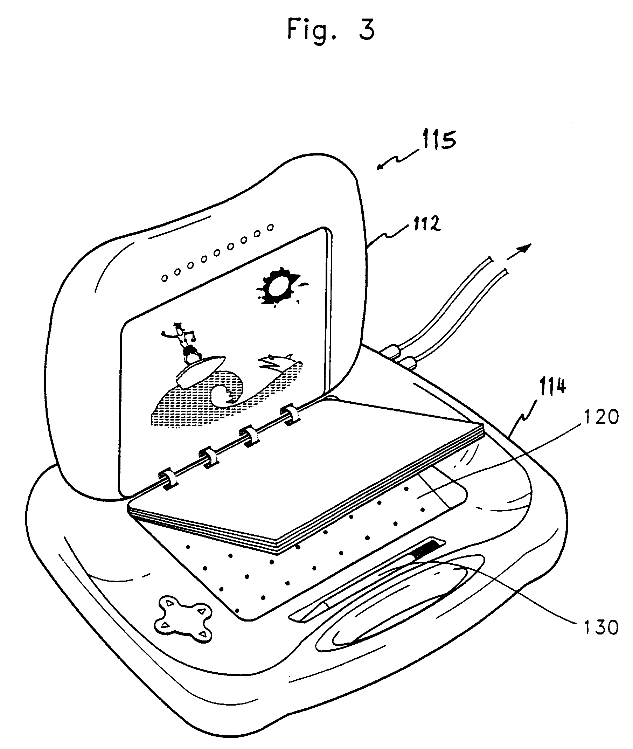

The operation and characteristics of an embodiment of the present invention with referring to FIGs. 3 through 7 will be described in detail hereinafter.

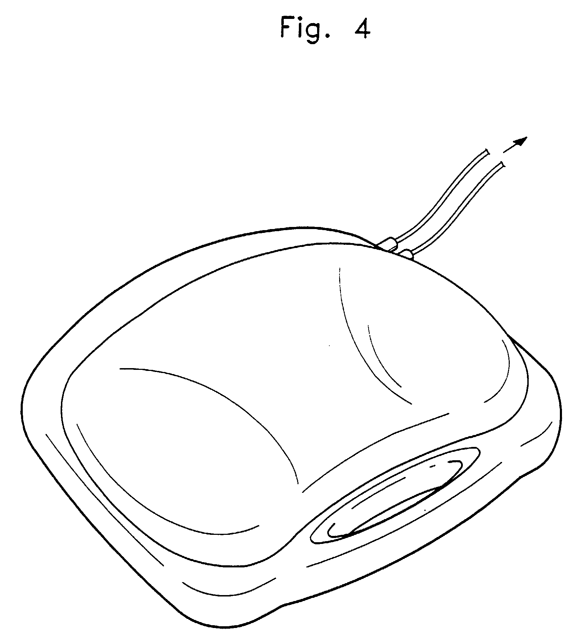

As shown in FIGs. 3 and 4, a multipurpose learning device according to an embodiment of the present invention includes a main body 115 having an upper case 112 and a lower case 114 which are hinge-connected, a picture book module 150 which is detachably connected through the upper case 112 and the lower case 114 and a controlling device 100 for controlling overall operation of the multipurpose learning device.

A receiving space for receiving the picture book module 150 is correspondingly formed in the upper and the lower cases 112, 114 and an electronic pen 130 is received in the lower case 114.

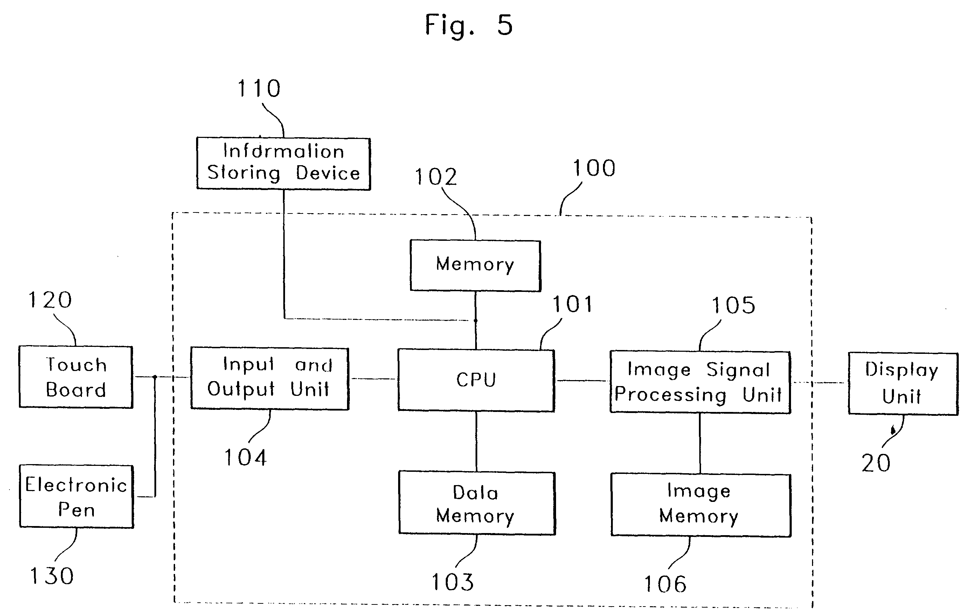

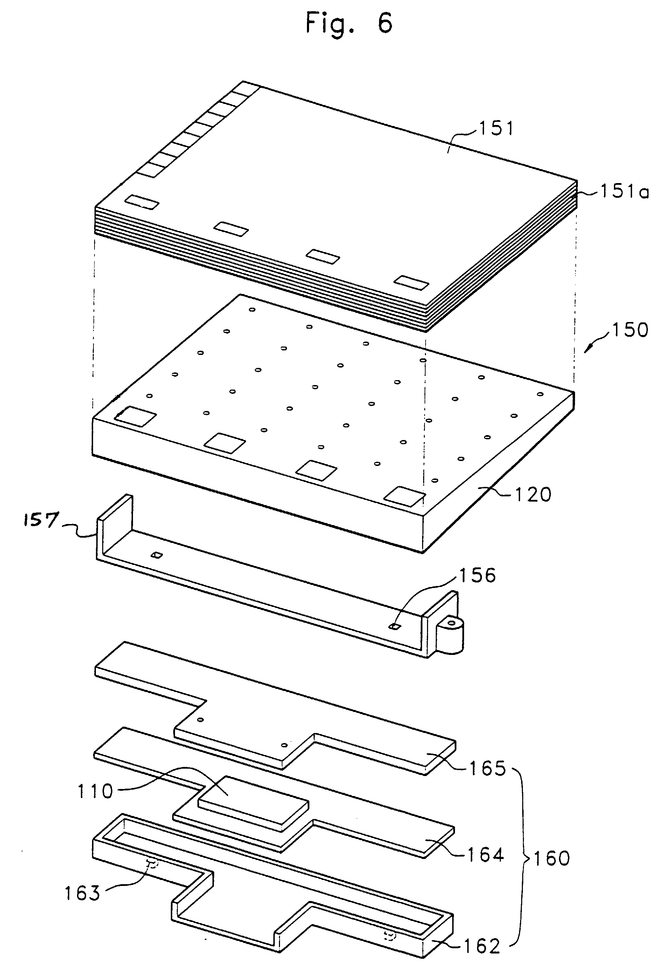

Referring to Figure 6, the picture book module 150 includes a picture book 151, a touch board 120 for receiving a picture book 151, a memory unit 160 which is detachably attached to the touch board 120. The picture book 151 has a plurality of sheets 151a and the sheets 151a are unfolded to a hinged direction of the upper case and the lower case. Means are provided such that a control device 100 (to be described later in relation to Figure 5) is able to determine which of the sheets 151a is being viewed. For instance, this may be done by having one or more conductive terminals for contacting with one or more contacting terminals. Such conductive terminals may be associated with picture button information relating to picture buttons on the sheets.

The touch board 120 is arranged to slope from an upper region (nearest the hinge) toward a lower region (furthest away from the hinge) such that it is declined to a predetermined angle toward the lower surface, and preferably the predetermined angle is 35° or less with reference to the horizontal. As mentioned later, by having such a slant in the touch board 120, when a user touches the touch board 120 using the electronic pen 130, a user may easily use the multipurpose learning device from the point of view of ergonomic engineering. A contacting terminal which corresponds to the conductive terminal formed in the sheets 151a is preferably formed associated with the touch board 120. As mentioned later, the conductive terminal is electrically connected to the contacting terminal and magnetically interacts when the electronic pen 130 is used above the touch board 120. The relative positions of the electronic pen 130 and the board 120 can be sensed even if there are a large number of sheets 151a between the tip of the pen and the touch board 120. For example, even if the tip of the pen 130 is spaced 2cm above the touch board, interaction between the two is registered. In a typical example, a picture book may have 10 sheets each of 0.17mm thickness.

The memory unit 160 includes a PCB 164 on which an information storing device (for example, a ROM 110) is mounted, a lower receiving unit 162 for receiving the PCB 164 and an upper cover 165. The memory unit 160 is installed on the touch board 120 by using a support 157 in such a manner that a connecting protrusion 163 which is formed on the bottom side of the lower receiving unit 162 and a connecting groove 156 which is formed on the inside of the support 157 are mutually connected and installed.

Referring to Figure 5, a control device 100 of the multipurpose learning device includes: an input and output unit 104 for inputting and outputting the electric signals related to the position of the electronic pen 130 which is touched by a user on the touch board 120; a memory 102 for storing a device program; a data memory 103 for storing temporary data which is generated during executing the device program; a central processing unit 101 for controlling overall device operation by reading the multimedia learning information from an information storing device such as a ROM 110 according to the signals of the input and output unit 104 and processing the multimedia learning information; an image signal processing unit 105 for converting the multimedia learning information to image data by controlling the central processing unit 101 and an image memory 106 for storing processed image data.

The usage of a multipurpose learning device having the abovementioned structure, will be described hereinafter.

First, the PCB 164 equipped with the ROM 110 is installed on the lower receiving unit 162 and the upper cover 165 is combined with the lower receiving unit 162 by using a screw. The support 157 is fixed to the rear side of the touch board 120 by using a screw and the memory unit 160 is inserted between the support 157 and the touch board 120. Accordingly as aforementioned, the connecting protrusion 163 formed on the bottom side of the lower receiving unit 162 of the memory unit 160 and the connecting groove 156 which is formed on the support 157 are mutually connected and installed.

The memory unit 160 and the touch board 120, connected as aforementioned manner, are installed on the lower case, then, the PCB 164 is combined with a connector(not shown) which is formed on the lower case and electrically connected.

Then, the picture book module 151 is installed on the touch board 120.

When the installation is finished like an aforementioned manner and the electric power is supplied to the multipurpose learning device, an image of the first sheet of the picture book module 151, in other words, an image of a cover is displayed as an initial image in the display unit 20.

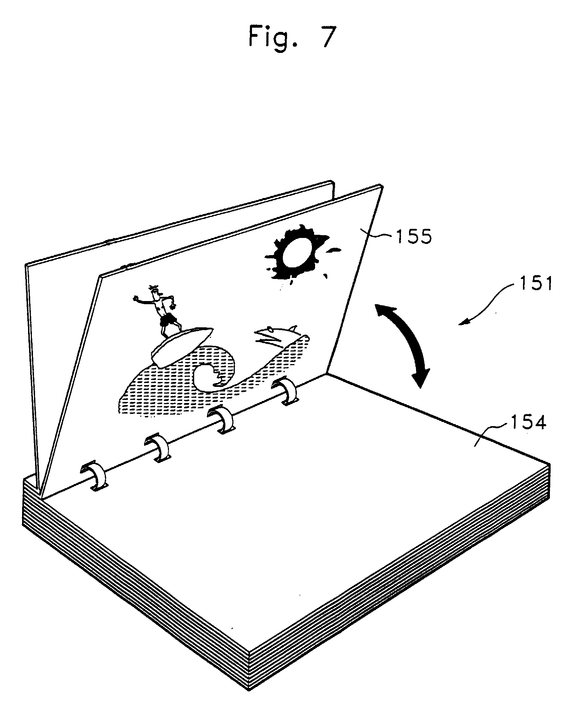

Referring to Figure 7, each front page 154 of the picture book 151a except a cover is a blank space and pictures are drawn in each rear page 155 of the picture book. And there is a plurality of picture buttons 152 corresponding to the learning information among the pictures. Accordingly, when a user turns the first sheet, the image corresponding to the picture which is drawn in the rear page 155 of the first sheet is displayed in the display unit 20. Then, the page sensing method is the same comparing to the conventional multipurpose learning device.

At this time, when a user touches the touch board 120 with the electronic pen 130, a cursor appears in the display unit 20 corresponding to the position of a touch board 120 and moves depending on the movement of the electronic pen 130. Accordingly, a user can see the movement of the cursor and directly select a predetermined picture button by touching the touch board 120 when the curser is located on the predetermined picture button.

Like an aforementioned manner, when a user may select a picture button, by magnetically exchanging signals between the touch board 120 and the electronic pen 130, the multimedia learning information which is consisted of the related voice and image data is sequentially displayed in the screen of the display unit 20. A television set is generally used for the display unit 20 and it is also equipped with a monitor for displaying the image signal and a speaker for outputting the audio signal from the multipurpose learning device.

When touching a predetermined position on the touch board 120, the electronic pen 130 can operate in a precise fashion if the surface of the touch board 120 and the electronic pen 130 are as perpendicular to one another as possible. Conventionally, a user uses the electronic pen 130 by gripping it in the same way as a pencil, but with the prior art system using the electronic pen 130 perpendicular to the touch board 120 is difficult for a user. According to this preferred aspect of the present invention, the surface of the touch board 120 is declined to a predetermined angle so as to practically arrange the surface to be perpendicular to the electronic pen 130. Preferably, the declined angle for the surface of the touch board 120 is 35° or less. In the preferred embodiment, the surface of the touch board 120 is sloped so as to achieve the declined angle but it is also possible to decline the lower case itself for receiving an essentially flat touch board and still bring about the required declined angle for ensuring that the electronic pen 130 is, in use, perpendicular to the upper surface of the touch board 120. As aforementioned, a user may ergonomically use the electronic pen 130 and additionally, the operation of the electronic pen 130 is exactly executed.

Moreover, according to the teachings of preferred embodiments of the present invention, the size of the multipurpose learning device can be reduced to about one half compared to a conventional device by enforcing that the unfolding direction of the sheets 151a of the picture book module correspond to a hinged direction of the upper case and the lower case. Accordingly, a toddler, a main user of the multipurpose learning device, can more easily use the multipurpose learning device with its lightened weight.

Moreover, when a user contacts and moves the electronic pen 130 across the sheets 151a of the picture book, the pictures drawn in the rear page 155 of the sheets 151a are not affected and are protected from damage because it is actually each front page 154 of the sheets 151a which are contacted and each of these front pages 154 except a cover is blank, the pictures being drawn on each rear page 155 of the picture book.

Moreover, a further advantage of preferred embodiments is that a user may exchange the ROM 110 of the memory unit 160 for updating the learning information to a new version, the exchanging operation of the ROM 110 of the memory unit 160 is easy because a user need only take out and exchange the memory unit 160.

While there have been illustrated and described what are considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation to the teaching of the present invention without departing from the central scope thereof. Therefore, it is intended that the present invention not be limited to the particular embodiment disclosed as the best mode contemplated for carrying out the present invention, but that the present invention includes all embodiments falling within the scope of the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A multipurpose learning device, comprising:
a main body (115) having an upper case (112) and a lower case (114) which are hinge-connected;
a picture book module (150) received to said main body (115); and,
an electronic pen (130) for selecting learning information from said picture book module (150),
wherein said picture book module (150) includes:
a picture book (151) including a plurality of sheets (151a);
a memory unit (160) for storing multimedia learning information corresponding to said picture book (151); and
a touch board (120) for sensing movement of said electronic pen (130) relative to said picture book.

2. A device according to claim 1, wherein the axis of the hinge joining the upper case (112) and the lower case (114) is substantially parallel to an unfolding axis of the sheets (151a).

3. A device according to claim 1 or 2, wherein said memory unit (160) is detachably connected to said picture book module (150).

4. A device according to claim 1, 2 or 3, in which each front page (154) of said picture book (151) except a cover is a blank space and each rear page (155) of said picture book (151) has a plurality of pictures.

5. A device according to claim 4, wherein said electronic pen (130) is arranged to be brought into close association with said rear pages (155) for triggering the selection of learning information.

6. A device according to any of claims 1 to 5, said memory unit (160) comprising:
a printed circuit board (164) having an information storing device (110) which stores said learning information;
a lower receiving unit (162) in which said printed circuit board (164) is received and on which a connecting portion (163) is formed; and
an upper cover (165) combined with said lower receiving unit.

7. A device according to claim 6, wherein a support (157) having a connecting region (156) is provided attached on the rear side of said touch board (120) and said memory unit (160) is provided installed on said touch board (120) by combining said connecting portion (163) with the connecting region (156) of said support.

8. A device according to claim 6 or 7, wherein said information storing device (110) is a ROM.

9. A device according to any of the preceding claims, the front surface of said touch board (120) is declined, in use, to a predetermined angle so as to slope toward a user.

10. A device according to claim 9, wherein said touch board (120) is wedge-shaped such that the front surface of the touch board slopes upwardly with respect to the rear surface.

11. A device according to claim 9, the front surface of the lower case (114) on which said touch board is received is declined to a predetermined angle.

12. A device according to claim 9, 10 or 11, wherein said predetermined angle is 35° or less.
